# EUROPEAN PATENT SPECIFICATION

(11) **EP 4 173 686 B1**
(45) Date of publication and mention of the grant of the patent: **23.07.2025**
(21) Application number: 22203083.5
(22) Date of filing: 21.10.2022
(51) Int. Cl.: B01D 11/02

(54) **PLANT AND RELATIVE METHOD FOR OPTIMIZING SOLID-LIQUID EXTRACTION PROCESSES IN WATER OR WATERY SOLVENTS IN SUBCRITICAL CONDITIONS**
ANLAGE UND VERFAHREN ZUR OPTIMIERUNG VON FEST-FLÜSSIG-EXTRAKTIONSPROZESSEN IN WASSER ODER WÄSSRIGEN LÖSUNGSMITTELN BEI UNTERKRITISCHEN BEDINGUNGEN
INSTALLATION ET MÉTHODE CORRESPONDANTE POUR OPTIMISER LES PROCESSUS D'EXTRACTION SOLIDE-LIQUIDE DANS L'EAU OU LES SOLVANTS AQUEUX DANS DES CONDITIONS SOUS-CRITIQUES

(30) Priority: 27.10.2021 IT 202100027575
(43) Date of publication of application: 03.05.2023
(73) Proprietor: C2 Food Upward Technologies Srl, 10139 Torino (IT)
(72) Inventor: CONCARI, Stefano, 43123 Parma (IT); CRAVOTTO, Giancarlo, 10137 Torino (IT); CRAVOTTO, Christian, 10137 Torino (IT)
(74) Representative: Emmi, Mario

(56) References cited:
- EP-A1- 0 705 319
- WO-A1-2020/183468
- CN-A- 112 843 779
- CN-B- 111 329 893
- CN-Y- 2 762 861
- GB-A- 2 480 459

## Description

### Scope of the invention

The present invention relates to the technical field of solid-liquid extraction of useful active ingredients from the corresponding organic and/or inorganic matrices containing them, with the use of a solvent, or a mixture of solvents, under subcritical conditions.

Specifically, the present invention relates, first of all, to an innovative plant able, on the one hand, to carry a liquid solvent, such as water and/or other suitable organic solvents and/or their mixtures, under subcritical conditions, and on the other hand, to carry out with the subcritical fluid obtained the extraction of active ingredients of interest from the aforementioned matrices in an optimal way, i.e. superior to what is known in the art, both as regards the extraction yield and as regards the quality of the extracts (for example, substantially without degradation thereof).

More particularly, the invention relates to the above-mentioned innovative plant and to a relative method that is particularly efficient and able to optimize, with respect to the known technique, the solid/liquid extraction process in subcritical water, or in a mixture thereof with other suitable solvents (for example: acetone, ethanol, eutectic mixtures so-called *"deep eutectic solvents*")*,* of substances/ingredients/active ingredients from organic and/or inorganic matrices.

### Preliminary definition

For the purposes of the present invention, and as is also apparent from documents of the prior art, it is stated that with the terms "subcritical fluid", "subcritical solvent" (or also, "mixture of subcritical solvents"), or "fluid/solvent under subcritical conditions", the present inventors intend to specifically indicate a solvent that is at a higher temperature than its boiling point, but lower than that of its critical point.

As is known, the critical point of a fluid is the set of particular conditions of maximum temperature (so-called *"critical temperature*") and maximum pressure (so-called *"critical pressure")* in which a substance can exist as a two-phase gas-liquid mixture (see, for example, Wikipedia, English version, under the entry *"Critical point* (*thermodynamics*)")*.* The critical point is a typical characteristic feature, which varies for each substance. By way of example, water has its critical point at a temperature of 373.946° C and at a pressure of 217.75 atm (see again Wikipedia, cited above; and Wagner, W., Pruß, A. (June 2002). "The IAPWS Formulation 1995 for the Thermodynamic Properties of Ordinary Water Substance for General and Scientific Use". Journal of Physical and Chemical Reference Data. 31 (2): 398. doi:10.1063/1.1461829.

### Brief references to the prior art

The solid-liquid extraction of substances/ingredients/active ingredients from organic and/or inorganic matrices has been a process known for some time.

Thanks to this type of extraction it is possible to obtain/recover precious active ingredients from so-called matrices that can be made up of mixtures of materials of organic, vegetable and/or animal, and/or inorganic origin, as well as from waste materials of various kinds.

By way of example, scientific literature reports a number of cases of extraction of plant matrices in subcritical water on a laboratory scale. Recent scientific articles offer a general picture of the state of the art of this extraction method, defined as "*green*", as reported, for example, in the following points a) and b):
a) Recent advances in the extraction of bioactive compounds with subcritical water: A review. By Zhang, Jixian et al. Trends in Food Science & Technology (2020), 95, 183-195;
b) Subcritical water: current status, advances, and applications for extractions, reactions and separations. By Moraes, Moyses Naves et al. RSC Green Chemistry Series (2018), 57 (Supercritical and other high-pressure solvent systems), 77-105.

For example, publication US6001256 is also known which describes how water under subcritical conditions, as described above, varies its chemical-physical properties such as dielectric constant, surface tension, viscosity and dissociation constant.

In other publications, such as, for example, CA 2546138 (2006), a reactor is described with an extraction vessel at adjustable temperature connected to a high-pressure pump for water supply, a cooler, a pressure relief valve and a collecting vessel. The aforementioned publication illustrates its application in the selective extraction of parts of plants by varying the temperature.

Furthermore, many other patents describe applications for the extraction of pharmacologically active substances from parts of plants and medicinal herbs, such as EP0705319, GB 2480459 and WO2018126097.

For example, GB2480459 (2011) describes a reactor equipped with a heating and cooling system and presents various extractive applications.

In turn, WO2018126097 discloses a subcritical water reactor with heating and cooling which operates under nitrogen pressure.

### Technical problem

However, from the examination of the prior art and literature relating to existing subcritical water reactors and to the related solid-liquid extraction methods, at least the following general limitations/disadvantages emerge:
1. Long heating and cooling times of the extraction solvent(s).
2. Long extraction kinetics and non-homogeneous extraction efficiency from the matrix as a result of the temperature and/or pressure gradient generated during maceration with and/or percolation of the extraction solvent.
3. Even quite significant degradation of the extract obtained, depending on the thermolability of the extracted active ingredients, due to the too long evaporation times that follow the extraction process.

Therefore, there is still a strong need in the sector to have a plant, and a related method, for the efficient, fast, safe and *"green"* extraction of precious substances/ingredients/active ingredients from suitable organic matrices (plant and/or animal) and/or inorganic.

The object of the present invention is to provide an adequate response to the technical problem described above.

### Summary of the invention

Therefore, it is an object of the present invention to provide a plant, and relative operating method, which offer an optimal solution to the aforementioned technical drawbacks.

In particular, the object of the present invention is to provide a series of technological innovations suitable for speeding up the extraction process and preserving the integrity of the extracted compounds (with respect to what is currently known in the state of the art), at the same time guaranteeing the desired, necessary, characteristics of eco-compatibility of the plant and the method *("green"* type of plant and extraction method).

These and other objects have been achieved with the plant for a *solid-liquid* extraction process with a liquid that passes through a matrix, or matrices, consisting of organic and/or inorganic residues in accordance with claim 1.

In accordance with this solution, all the aforementioned technical drawbacks are solved.

In particular, now, the liquid brought to a subcritical condition enters and moves radially inside the tank where the matrices are placed.

Therefore, it moves from an entry point towards the external wall of the tank and therefore also radially intercepting the matrices placed inside the tank.

In particular, advantageously, the baskets are crossed by the subcritical flow according to a radial path through the distribution of holes in said baskets.

In this way the material placed inside is hit by a radial flow.

This radial motion optimizes the extraction.

Furthermore, the plant (or reactor, if preferred) according to the invention guarantees a radial flow of the subcritical extraction fluid which flow is also modulable.

The subcritical fluid (preferably liquid as mentioned) passes through all the individual extractive components (the so-called "baskets", defined and described in detail below) entering along the vertical axis of the tank and branching radially towards the external walls of the tank itself.

This flow which, starting from 300 L/h, can reach up to 1000 L/h, has unexpectedly made it possible to prevent stagnation and localized situations of inefficient mass exchange. Consequently, this leads to optimal extractive homogeneity.

In summary, the particular innovative configuration of the extraction plant (or reactor) according to the invention therefore allows to obtain extracts from various types of solid matrices (organic and/or inorganic, for example, plant and/or animal and/or chemical, and so on) faster and with higher yields than the subcritical water reactors commonly used in the industry.

Advantageously, at the outlet from the high pressure section, therefore downstream of the high pressure section, there is a subsequent section (S291, P290) of controlled expansion placed in fluid communication, preferably liquid communication, with the high pressure section.

The combination of the extractive system according to the present invention with the above described so-called expansion bubble system (or multiple effect, as defined and described in detail below), guarantees a rapid concentration of the extract and an almost immediate decrease in temperature.

Advantageously, therefore, the immediate evaporation and sudden decrease of the temperature of the extraction fluid leaving the reactor helps to preserve the integrity of the active ingredients of interest contained in the extract, in particular the thermolabile ones.

Also in the case of aqueous mixtures with other solvents, there is the important advantage that the percentage of the solvent in combination with water remains below the limits required for ATEX systems, with obvious economic and management advantages of the system itself. In fact, for example, for safety reasons, hydroalcoholic mixtures in normal plants must maintain an ethanol level below 50%.

Advantageously, in order to immediately bring the liquid to a subcritical condition in said high pressure section, a second heating means (H201) is provided in said high pressure section, preferably in the form of a second heat exchanger.

Therefore, before entering the tank where the matrices are arranged, the liquid reaches the subcritical condition by increasing the temperature above the boiling point and, consequently, having an increase in pressure.

In this way the matrices are intercepted by a liquid which operates in a subcritical condition.

Advantageously, said subcritical condition corresponds, in the case of water, to a water temperature comprised in a range between 125°C and 155°C, preferably between 130°C and 150°C.

Advantageously, in said subcritical condition the pressure of the liquid (in this case water) is between 3 bar and 6 bar.

This pressure increase is a consequence of a partial evaporation of the same liquid in the circuit where it circulates in said high pressure section.

Advantageously, therefore, said high pressure section is configured to reach and maintain an operating pressure comprised in a range between 3 bar and 6 bar.

Pressure control valves may be provided.

The delivery duct extends inside the containment volume and is provided with a plurality of through holes (F) along its length.

Each basket forms an annular space (12) for containing the matrix delimited by a first wall (13) and a second wall (11) which surrounds the first wall, said first and second walls being provided with a plurality of holes (11", 14) passing through and with the first wall being in the form of a longitudinally hollow tube so as to form an axial channel (C).

Advantageously, this axial channel is of such a size as to be able to slidingly house the delivery duct (32) along it.

Advantageously, in this way, one or more baskets can be stacked inside the containment volume (31) with the delivery duct (32) which slides into the channel (C) and crosses said channel (C) of each basket. (10).

In this way, in use, the liquid flow going up the delivery path (32), as it rises inside the containment volume, exits radially from the holes (F) of the delivery duct, intercepting the holes in the first wall (13) of each basket to enter the space (12) of the basket and radially cross the space (12) exiting the holes in the second wall.

In this way, the matrix is crossed with a radial flow parallel to the base of the basket where the material rests.

Advantageously, a subsequent controlled expansion section (S291, P290) is comprised at the outlet from the high pressure section, placed in fluid communication, preferably in liquid communication, with the high pressure section.

Advantageously, at the inlet to the high pressure section, therefore upstream of said high pressure section, a pre-heating section can be comprised in fluid communication, preferably liquid communication, with said high pressure section and configured to heat the liquid to a first temperature value before entering the high pressure section.

This pre-heating promotes quicker achievement of the subcritical condition in the subsequent high pressure section.

This allows energy savings and promotes extraction.

Advantageously, said pre-heating section is configured to heat the solvent to a temperature value below its subcritical condition.

Advantageously, for example, in said pre-heating section the solvent is brought to a temperature range between 85°C and 97°C, preferably about 95°C, in the case of water.

Advantageously, therefore, said pre-heating section is configured to heat the solvent in a temperature range between 85°C and 97°C, preferably about 95°C.

According to these ranges, the liquid is brought close to the evaporation point, thus reducing the subsequent times of reaching the subcritical condition.

Advantageously, said pre-heating section forms a closed circulation loop comprising:
- At least one containment tank (S101); and
- First heating means (H101) in such a way that the liquid can circulate one or more times from the tank towards said first heating means or vice versa, preferably a first heat exchanger, in such a way as to reach a predetermined temperature.

Advantageously, said temperature lies in a temperature range between 85°C and 97°C, even more preferably about 95°C, in the case of water.

Advantageously, an outlet duct is obviously provided which places said pre-heating section in fluid communication with said high pressure section.

In this way, the preheated liquid is sent to the high pressure section where the extraction takes place.

Advantageously, said high pressure section forms a closed circulation loop comprising said at least one tank (S301, S401) and said second heating means (H201) in such a way that the liquid can in use circulate in said closed loop once or several times passing, each time, from the second heating means (H201) to reach and maintain the subcritical condition to then be introduced into said tank through the delivery duct (31) and exit said tank through the outlet duct.

Advantageously, therefore, the liquid recirculates to repeat this closed-loop path in the case of a number of circulations greater than or equal to two.

Once the expected number of circulations in which it has intercepted "n" times the baskets for extraction (with "n" corresponding to the number of circulations made), the liquid containing the extracts is sent to the next controlled expansion section.

On the other hand, in the case of a single circulation, at the outlet from the outlet duct, it is immediately directed to the next controlled expansion section.

In this case, therefore, an extraction is carried out with a single passage in the tank containing the matrices.

Advantageously, at least one pump is provided which maintains this circulation for a predetermined time according to single or multiple circulation.

Advantageously, a duct is provided which connects said high pressure section with the subsequent controlled expansion section.

In this way the subcritical liquid containing the active ingredients extracted from contact with the matrices is sent to said expansion section.

Advantageously, the basket (10) has an external perforated wall (11) and an internal perforated wall (13) forming the axial channel (C).

Advantageously, the basket can be substantially cylindrical in shape with said cylindrical external and internal parts.

Advantageously, the delivery duct extends inside the containment volume along an axial direction coinciding with the longitudinal axis of the tank where it is inserted.

Also described here is a method for carrying out a solid-liquid extraction process with a liquid that passes through a matrix consisting of organic and/or inorganic residues, the method comprising at least one extraction step which includes:
- **a)** Arrangement of one or more baskets (10) each having a space (12) in which to store an organic and/or inorganic matrix and wherein each basket has a distribution of holes that allows the passage of a liquid which, passing through the basket passes through said space (12) intercepting the matrix arranged in said space (12);
- **b)** Arrangement of an organic and/or inorganic matrix in said space (12) of said one or more baskets;
- **c)** Arrangement of said one or more baskets inside the containment volume (31) of at least one tank (S301, S401);
- **d)** Sending a liquid into said containment volume (31) of the tank in such a way as to intercept said one or more baskets;
- **e)** And wherein the liquid entering said containment volume spreads radially into said containment volume (31), hitting and passing through said baskets radially;
- And wherein the liquid in said extraction step is in a subcritical condition.

Advantageously, the liquid, in the case of water, in said extraction step under said subcritical condition is brought to a temperature comprised between 125°C and 155°C, preferably between 130°C and 150°C.

Advantageously, the pressure of the liquid in said subcritical condition is comprised in a range between 3 and 6 bar.

Advantageously, in said extraction step an immediate heating of the liquid is provided through said second heating means, in such a way as to immediately bring the liquid to a subcritical condition before its entry into the tank containing the matrices.

Advantageously, at the end of said extraction step, a subsequent vacuum expansion step of the liquid is provided in such a way as to cause a reduction in pressure and temperature.

Advantageously, in said extraction step, self-evaporation of the liquid is created due to the conditions created with an immediate lowering of pressure and, consequently, a lowering of temperature, preferably bringing the liquid to around 70°C in the case of water.

Advantageously, before said extraction step, a liquid pre-heating step can be provided.

Advantageously, in said pre-heating step the liquid is brought to a temperature below the subcritical condition, preferably at atmospheric pressure.

Advantageously, for example, said pre-heating step determines the attainment for the liquid (in this case of example water) of a temperature range comprised between 80°C and 97°C, preferably at atmospheric pressure.

More particularly, advantageously, said pre-heating step causes the liquid to reach a temperature range below the evaporation value, preferably in the case of water said temperature being comprised between 80°C and 97°C, even more preferably at atmospheric pressure.

These values are therefore below the temperature at which the subcritical condition is reached but already determine heating that facilitates and speeds up the subsequent step of reaching the subcritical condition.

Advantageously, in the case of more baskets inserted into the containment volume (31), these are stacked one on top of the other.

Advantageously, said method is carried out with a plant according to one or more of the characteristics described above.

Advantageously, in said extraction step:
- Said operation of inserting said one or more baskets provides for inserting the/each basket loaded with the organic and/or inorganic matrix slidingly along the delivery duct so that said delivery duct (32) is slidingly inserted along the channel (C) of the/each basket that can slide along it, the delivery duct thus acting as a guide-pin for inserting one or more baskets loaded with the matrix along it;
- Sending the liquid along the delivery duct in such a way that the liquid spreads radially through the matrix to fall back out of each basket to the bottom of the tank and be sent to an outlet duct (33).

Advantageously, in said extraction step a closed circulation of the liquid in a subcritical condition is provided, which liquid circulates several times in and out of said tank (S301, S401).

Advantageously, according to one or more of the configurations described above, in the step following the extraction step, the liquid is sent to the next controlled expansion zone once the extraction process from the organic matrices is finished.

Advantageously, in said expansion zone a sudden evaporation takes place and a consequent sudden drop in temperature.

The following method for carrying out a solid-liquid extraction process with a liquid, for example water, which passes through a matrix consisting of organic and/or inorganic residues, is therefore considered a preferred form of the invention, the method comprising:
- An extraction step which involves sending the liquid to a section where it is brought to the subcritical condition and therefore sent inside one or more tanks containing the organic matrices, the liquid being in a subcritical condition;
- And wherein at the end of said extraction step, a subsequent step of vacuum expansion of the liquid in a subcritical condition coming from said extraction step is provided in such a way as to cause a reduction in pressure and temperature.

In this way, extraction with solvent in subcritical condition and evaporation by expansion determine good extraction.

Advantageously, in order to optimize the extraction, the fluid, preferably the liquid, in a subcritical condition hits the matrices inside the tank according to a radial path which from one point moves radially towards the external wall (35) of the tank.

Regardless of the radial flow or in combination with the radial flow, advantageously, a step of pre-heating the liquid can be provided before entering the section where it is brought into the subcritical condition and therefore before entering the section that operates the extraction.

This promotes quicker achievement of the subcritical condition.

Advantageously, in this way, in said pre-heating step the liquid reaches a temperature below the temperature value which determines the achievement of the subcritical condition, preferably the achievement of a temperature range for the liquid comprised between 80°C and 97°C, even more preferably at atmospheric pressure.

Advantageously, these ranges of temperature values mentioned above are valid in the case of a liquid which is water.

Advantageously, the liquid in said extractive step in said subcritical condition is brought to a temperature comprised between 125°C and 155°C, preferably between 130°C and 150°C, preferably at a pressure comprised in a range between 3 and 6 bar.

These values are advantageously applied in the case of water as a solvent.

### Brief description of the drawings

Further characteristics and advantages of the present plant, and relative operating method, according to the invention, will become clearer from the following description of some preferred embodiments thereof, in combination with the attached drawings, in which:
- Figure 1 shows an axonometric view of a part of the plant formed by a low pressure ring (or section, if preferred) and a high pressure ring (or section, if preferred) then communicating with an expansion section (not shown in the figure);
- Figure 2 shows a side view of the plant of Figure 1;
- Figure 2A illustrates the operating diagram of the so-called low pressure ring (or section, if preferred);
- Figure 3 shows an axonometric view of a single containment structure of the matrix 10 (the so-called *"basket",* described below) into which a matrix (organic and/or inorganic) is loaded and present in the high pressure section (or ring, if preferred);
- Figure 3A is a schematic diagram showing the movement of the subcritical solvent flow which rises axially along the delivery duct of the extraction tank (also called "containment tank" or "diffuser container") S301 or S401 and with said flow passing through the holes radially crosses the matrix mounted concentrically to the delivery duct;
- Figures 3B and 3C illustrate a structure relating to the basket shown schematically in Figure 3A; in particular, figure 3C shows two baskets stacked inside the extraction tank of figure 4;
- Figure 4 shows a schematic diagram of the movement of the subcritical solvent flow inside the extraction tank (also called "containment tank" or "diffuser container") S301 or S401, which indicates a number of "baskets" (in the figure there are 5) to contain the matrices to be extracted;
- Figure 5 shows a top view of a basket arranged in the diffuser container S301 or S401 according to the invention together with the radial flow (see radial arrows which radially branch off from the central axis of symmetry towards the external wall);
- Figure 6A shows an image of a basket of the invention containing a matrix consisting of a mixture of hazelnut and chestnut skins;
- Figure 6B shows an image of a basket of the invention containing a matrix consisting of a mixture of pomace;
- Finally, figure 7 shows structurally the vacuum controlled expansion and concentration unit placed in fluid communication with the high pressure ring and which therefore receives the subcritical flow at the end of the extraction step.

### Description of some preferred embodiments

It should be noted that what is described below and highlighted in the attached figures is a purely exemplary and absolutely non-limiting description of some preferred embodiments of the present invention.

### STRUCTURAL DESCRIPTION OF THE PLANT

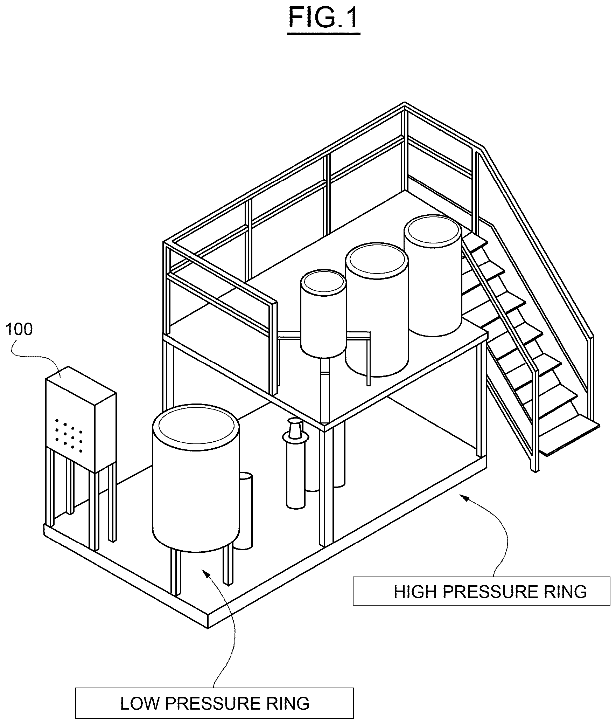

In accordance with the invention, Figure 1 shows an axonometric view of a possible embodiment of a plant according to the invention.

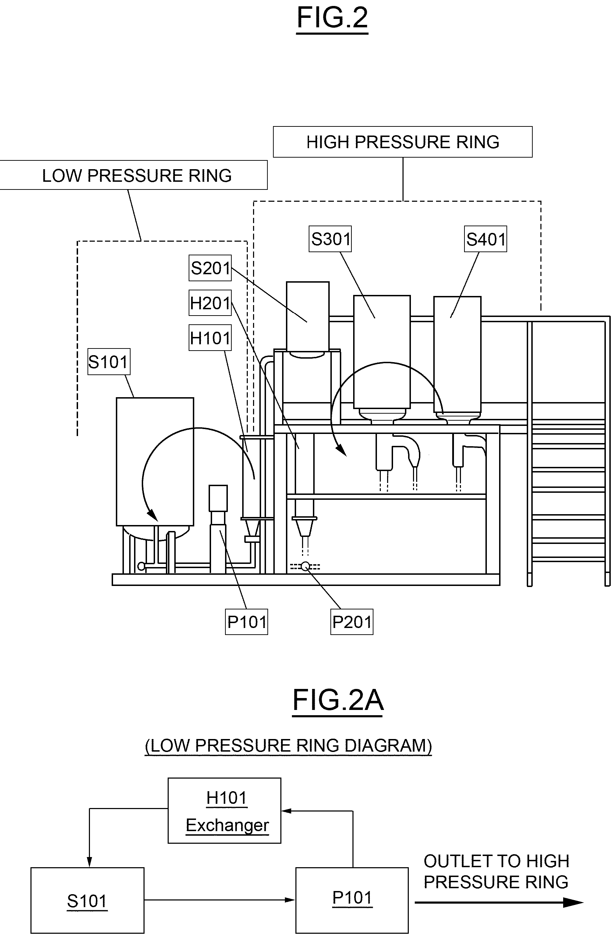

The system includes a so-called low pressure zone, conventionally defined here also as a "low pressure ring" (or low pressure section), and a so-called high pressure zone, conventionally defined here also as a "high pressure ring" (or high pressure section), as indicated in figures 1 and 2 attached.

With reference to Figure 1, therefore, a load-bearing structure is highlighted on which the components, described in detail below, which constitute the low pressure ring and the high pressure ring, in addition to any other additional components, are mounted.

In a separate position, for example nearby (as shown in the figure), an electrical panel 100 is also provided, with PLC control for controlling the entire system. Obviously, said electrical panel with PLC control can also be arranged, depending on the situation, in a distant position, so as to allow remote control.

A subsequent expansion section is then provided, not shown in figures 1 and 2, but placed in fluid communication with the high pressure section and downstream of the high pressure section.

As clarified in the present description below, the path of the solvent, in use, moves from the low pressure ring towards the subsequent high pressure ring and from here to the subsequent controlled expansion section.

The terminology "upstream" and "downstream", when used, must therefore be understood according to this direction of movement of the liquid mentioned above (from the low pressure ring towards the expansion section with the high pressure ring interposed between them).

With reference to figure 2, the low pressure ring substantially comprises the components S101, H101 and P101.

Component S101 is a tank which is suitable for containing the solvent (generally a liquid, such as for example water and/or a mixture thereof, for example water, with other suitable solvents).

In fact, as clarified below, the tank S101 is generally and preferably loaded with water and/or another solvent.

The tank S101 has the function of containing the solvent and keeping it at an ideal pre-heated temperature.

Preheating is obtained, as described below, through a circulation along a closed loop formed by said tank S101, by a heating device H101 and by a circulation pump P101.

Thanks to this pre-heating step, carried out in the low pressure ring, it is possible to recover downtime in the subsequent extraction step (high pressure ring).

More specifically, this preheating step brings the solvent from room temperature to a temperature below evaporation temperature.

In the case of water, for example, this is included in a range from 85°C to 97°C, preferably at the value of about 95°C, more preferably 95°C. It is preferable not to exceed this range to prevent the risk of evaporation of the solvent itself.

In particular, with reference to the most preferred temperature of 95°C, it is preferred not to exceed this threshold to prevent the risk of evaporation.

These temperature values are preferably measured at atmospheric pressure.

In this way, as better clarified below, the subsequent step will be dedicated only to the final heating of the solvent (for example, as mentioned above, water) up to a subcritical condition (generally at about 150°C in the case of water).

The component P101 is therefore a pump which pushes the liquid contained in the tank towards a heating device H101, preferably, as in the case described, in the form of a heat exchanger.

Obviously, other technical embodiments of the heating device H101 can be carried out, depending on the present or preferred environmental conditions, and therefore not necessarily in the form of a heat exchanger.

With reference to Figure 2, therefore, the water or liquid generally loaded into the tank S101 is circulated to keep it at the ideal temperature, as described above by way of example, in order to then let it enter the high pressure ring, where the actual process takes place.

As already mentioned, and as depicted in figure 2, the low pressure ring, defined precisely by the components S101, P101 and H101, works preferably, but not necessarily, according to a closed circulation (i.e. closed loop) in such a way that the liquid circulates several times through the heat exchanger until it reaches a predetermined temperature value which corresponds to the range mentioned above. This is also clearly highlighted in figure 2A. In fact, a closed circulation allows an easier and more progressive achievement of the desired temperature.

In accordance with the method and related plant described here, with this low pressure ring the water (or liquid solvent in general) pre-loaded into the tank S101 is heated, making it circulate in the aforementioned low pressure ring through the exchanger until temperatures are reached which are in said range from 85°C to 97°C with a preferred temperature value of 95°C or about 95°C (for example ± 1°C). In this way it remains below the boiling point but minimizes the heating transient in the subsequent high pressure ring to reach the subcritical condition.

The low pressure ring is then communicating with the high pressure ring which receives the preheated liquid solvent to further process it until it reaches subcritical conditions and then use it, through the passage into the organic and/or inorganic matrices, for extraction of the active ingredients.

Then, going to the second ring (i.e. the high pressure one) this mainly includes the following components:
At least one tank (S301, S401), also defined in the present description as a diffuser container.
One or more baskets (described below) containing the matrix, consisting of the mixture of organic and/or inorganic material, and arranged (one or more than one of them) inside the tank itself;
A heating system (second heating means) to intercept the incoming liquid and bring it to a subcritical condition before entering the tank to perform the extraction.

In this way it is possible to create a circulation, also in this case preferably, but not necessarily, in a closed loop, in which the solvent enters the diffuser container several times, spreading radially into said one or more baskets and therefore radially intercepting the matrix/matrices prepared inside them to then exit the tank and possibly re-enter it, according to this cycle, a predetermined number of times.

However, a single passage inside the diffuser container is not excluded even if a multiple passage, in a closed loop, optimizes extraction.

In all cases the liquid operates in a subcritical condition.

In this regard, as anticipated above, also in this case there is a heating device H201 present (see for example figure 2) which during circulation, for example as mentioned, a closed loop circulation in which the solvent circulates several times entering and exiting the tank (S301, S401), determines and maintains a further rise in temperature responsible for reaching the subcritical condition. The aforementioned temperature rise, which exceeds the boiling point of the solvent, causes the generation of vapour which therefore increases the pressure in the system, bringing and maintaining the solvent itself into subcritical conditions.

Obviously, there is also a pump (P201) to activate and maintain the aforementioned circulation.

The solvent, at an increased temperature above the boiling point of the solvent (i.e., the subcritical temperature), intercepts the organic and/or inorganic material of the matrix present in the basket(s) in a radial direction, therefore carrying out the extraction.

Going further into the structural details of the invention, there is firstly at least one extraction tank, also known as a "diffuser container" (figures 1 and 2 illustrate by way of example two diffuser containers S301, S401 connected in series with each other, but they could also be in parallel with each other).

Therefore, according to a preferred form of the invention, the plant shown in figure 2 highlights the presence of at least two diffuser containers placed in succession one next to the other but, obviously, even just one or more than one could be used, for example three or more, mounted in series and/or in parallel, depending on the type or quantity of matrices to be extracted.

The diffuser container is a fundamental part of the plant relative to the high pressure ring as it is intended to contain the organic and/or inorganic matrix and to perform the extraction thereof in an optimal way, under subcritical conditions of the extraction solvent.

In the present description, the general term "matrix" means the mixture of organic and/or inorganic material to be extracted, wherein the aforementioned organic mixture may be of plant and/or animal origin.

For example, organic matrices can be extracted in which the organic material is constituted, for example, by a mixture that can be made up, in a non-limiting way, of one or more of the following components: herbs, leaves, branches, seeds, kernels, fruit and vegetable peel (by way of non-limiting example only, matrices consisting of mixtures of pomace and/or hazelnut and chestnut peel and/or blueberry peel and/or waste from cocoa processing can be extracted, and so on).

Alternatively, organic matrices obtained from animal organic material can be extracted (for example, from processing waste thereof, such as bones and/or tendons and/or hair and/or skin).

In a further preferred alternative, organic matrices obtained from a plant and animal mixture can be extracted by mixing one or more components of herbs, leaves, seeds and kernels, fruit and vegetable peel with animal organic material.

In a further preferred alternative, it is possible to extract inorganic matrices obtained from various materials such as, for example, mineralized bones, earth, sand, mud.

A mixture of organic and inorganic matrix is certainly possible.

In all the above cases, preferably, the size or granulometry of the components of the mixture which constitutes the matrix to be extracted should be on average greater than 0.5 mm.

What is obtained is a concentrated extract, for example, with a high content of polyphenols and/or alkaloids and/or salts and/or specific water-soluble components depending on the matrix used. Such components have commercial value, for example, on the pharmaceutical or food industry market which fully justifies the application.

Each diffuser container therefore contains one or more matrices as described above, loaded into one or more baskets (described in detail below), which will be crossed by the subcritical solvent to operate the extraction.

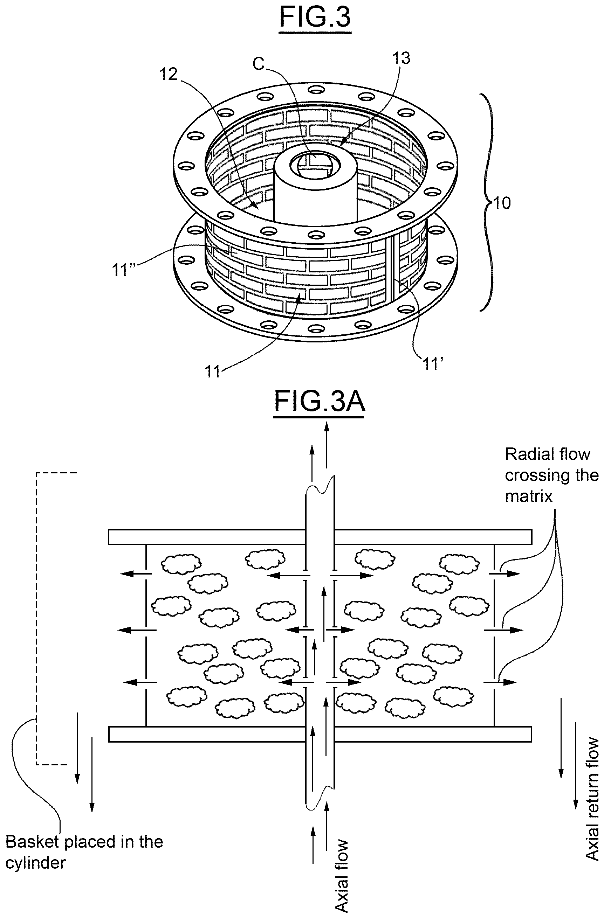

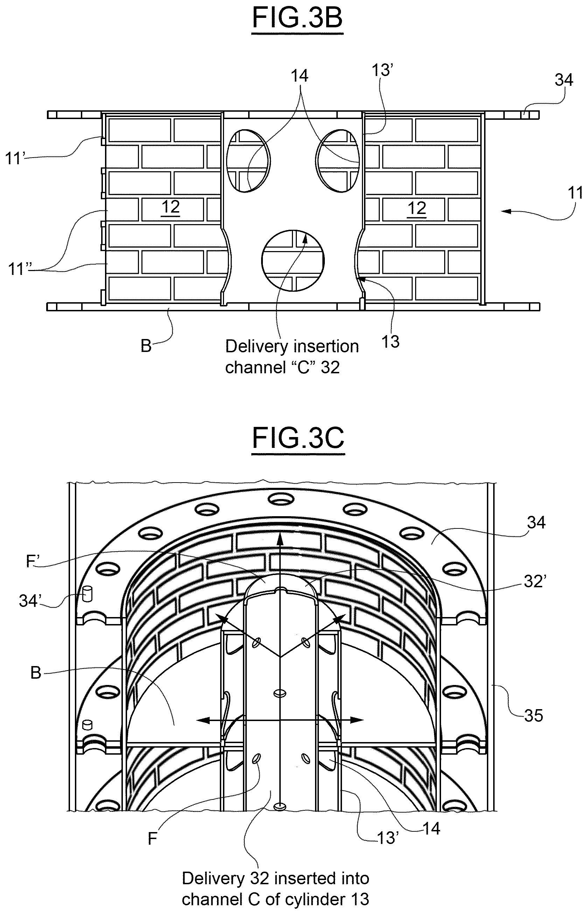

Figure 3 therefore represents an individual containment structure 10 of the matrix, for example, a so-called basket 10, containing an organic and/or inorganic matrix (i.e., a basket with the mixture of organic and/or inorganic material placed inside it) and, together with this matrix, adapted to be inserted into the diffuser container.

The structure of the basket shown in figure 10 (deprived of the matrix material inside it, for greater descriptive clarity) is preferably of the type with a double coaxial cylinder in such a way as to define an annular space for the matrix (i.e., the organic and/or inorganic matrix).

The space is therefore delimited internally and externally by a mesh wall to allow the radial passage of the solvent which, crossing the net itself, comes into contact with the matrix and then exits laterally and flows downwards towards the outlet of the diffuser container.

In fact, figure 3 shows an axonometric view of the substantially cylindrical shaped basket 10 which provides for an external cylinder 11 formed by an external cylindrical wall 11' scattered with through holes 11" (for example it could be a micro-perforated mesh).

The dimensions of the holes 11", which can be selected according to the requirements, must obviously be such as to contain the material of the matrix without dispersing it even after the passage of the solvent.

For example, holes (11") of dimensions that are much greater than the normal particle size of the components of the matrix can be made but it is possible to cover the entire wall, and therefore the holes 11'', with a perforated metal net, therefore with meshes, with selected holes of predetermined size exactly as if it were a sieve. In this way, moreover, by removing the net and replacing it with another one, for example with different holes, the size of the holes can be easily changed without structurally intervening on the entire basket.

The seat 12 for containing the organic and/or inorganic matrix is an annular space 12 delimited by an internal cylinder 13 coaxial to the external cylinder 11. The internal cylinder 13 is therefore, in turn, axially hollow so as to constitute a duct to allow a further duct belonging to the tank to be received inside it, along its longitudinal length. The channel that it forms is indicated in the figure by the letter C.

Therefore, the external 11 and internal 13 cylinders are spaced apart and with the internal cylinder 13 coaxial to the external cylinder 11 in such a way as to determine the space 12 for receiving the matrix.

The space 12 is obviously delimited by a support base B, clearly visible in figures 3A, 3B and 3C.

This structure is very well described further in the section of figure 3B which highlights the internal cylinder 13 which is a channel formed by a cylindrical wall 13' also provided with a plurality of through holes 14.

Also the cylindrical wall 13' may possibly have larger holes than the normal particle sizes used relating to the organic and/or inorganic matrix and can therefore be covered with a perforated mesh, exactly as said for the wall 11'.

Therefore, as clearly shown in figure 3B, the cylinder 13 is thus a fully perforated duct (wall 13' perforated with holes 14) which runs coaxially to the external cylinder 11, formed by the wall 11' also perforated with through holes 11".

The space 12 is laterally delimited by the walls 11' and 13' and by the base B which radially connects the internal cylinder to the external one.

The space 12 is preferably open at the top to allow the space 12 to be filled with the material constituting the matrix.

It could be closed with a removable lid.

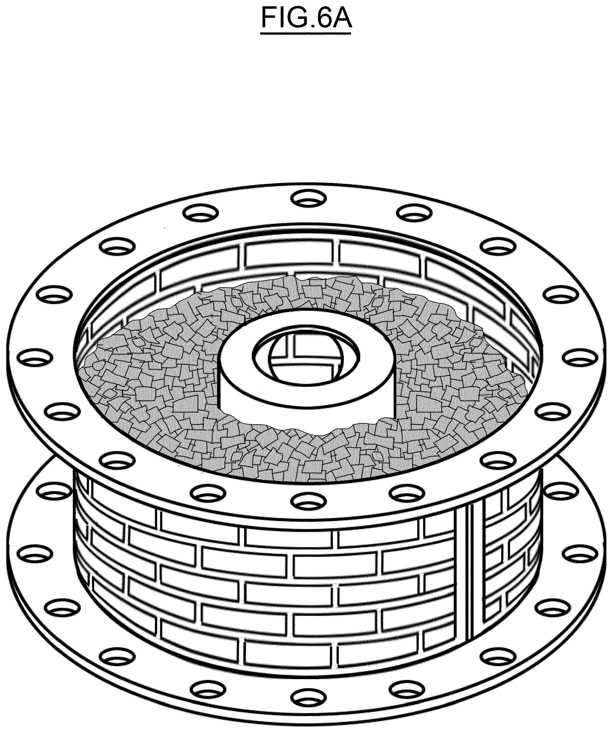

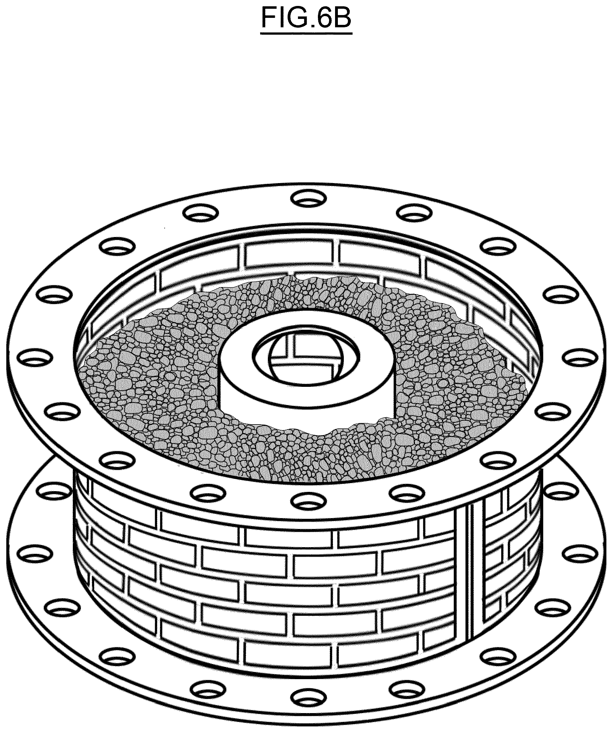

Figures 6A and 6B are two images showing the basket filled with mixtures of different organic materials.

As will be better clarified in the following description and as depicted also in figure 3A, thanks to this conformation of the basket 10 the liquid that rises along the section 13 of each basket (channel C) can radially cross the entire basket moving in a radial direction which from the duct 13 enters the space 12 through the holes 14 and moves radially towards the external perforated cylinder 11, thus crossing the matrix according to this radial path.

Although the basket has been described as having a cylindrical annular shape, this does not exclude shapes that are not necessarily cylindrical, for example with a square or different cross-sectional shape.

The cylindrical shape is obviously easier to make and, from a certain point of view, better for working under pressure.

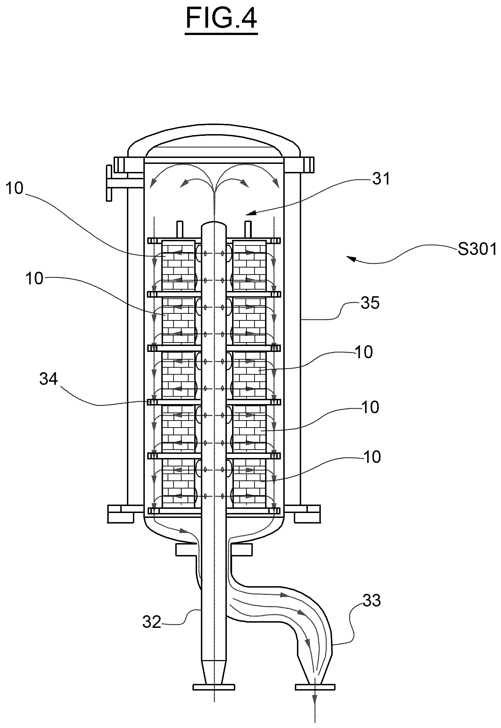

Going on to figure 4, a diffuser container structure (S301 or S401) is described which is suitable for containing one or more of said baskets 10 described above.

In the case of several baskets, these are stacked on top of each other, as shown in figure 4.

The diffuser container (or simply tank) can be of any shape. It is preferably cylindrical in shape like the baskets it contains.

Said container is externally delimited by a wall 35 which delimits a containment volume 31 inside which one or more of the baskets 10 are arranged with the organic and/or inorganic matrix inside them.

As mentioned, the external shape of the diffuser container can for example be cylindrical but any other useful shape is however possible.

Again with reference to figure 4, the tank S301 comprises an inlet duct 32 (or delivery duct or delivery path, if preferred) which enters the containment volume 31 from the outside, positioning itself along the central longitudinal axis of the container diffuser. It enters from the bottom and goes towards the top of the container along the longitudinal axis thereof. There is also an outlet duct 33 from the tank (or outlet path, if preferred).

Through said inlet duct 32, the solvent, coming from the pre-heating section, enters the containment volume 31 once the subcritical condition has been reached by passing through the second heating means. It comes out through the outlet duct 33 in order to successively be able to be reintroduced therein through the delivery 32 in the case of multiple circulation.

Preferably, there is a closed-loop circulation, meaning that the liquid circulates several times in said high-pressure section (precisely the high-pressure ring) to intercept the matrices several times and better perform the extraction. Everything therefore takes place according to a certain operational protocol.

However a single step is still possible.

An outlet duct 33 is then provided, preferably always connected to the base of the tank (see figure 4).

In this way, through the outlet duct 33, the liquid is either recirculated in said high pressure ring for a predetermined number of times or, at the end of the first circulation, it is sent to the next expansion section.

The delivery duct 32, in the portion arranged inside the tank into which it penetrates, is perforated with holes F shown better in figure 3C.

In this way, as indicated by the flow direction shown in figure 4, the liquid that rises along the delivery 32 can radially exit from the holes F to intercept the holes 14 of the channel 13 relative to the basket.

In this way the flow radially crosses the space 12 of each basket going towards the wall 11 where it further intercepts the holes 11' to exit outside the basket and fall downwards then to be conveyed into the outlet duct 33.

In fact, figure 3C clearly shows the sectional view of the duct 32 which is inserted coaxially into the channel relative to the cylinder 11 of each stacked basket. Figure 3C very clearly shows the radial trend of the liquid which radially crosses the basket.

Figure 4 therefore clearly shows the path followed by the liquid entering through the duct 32 and then exiting through the duct 33.

The baskets 10 are therefore inserted inside the diffuser container in a stacked manner one on top of the other.

Each basket 10 can provide in correspondence with its two bases (the upper open one and the lower base B) one annular-radial extension 34 which forms a good support surface for a base and/or for the upper basket.

In this way the baskets can be neatly stacked on top of each other.

One or more reference pins 34' (see figure 3C) can help to accurately insert the overlapping baskets.

As already anticipated, therefore, the duct 32 has a series of through holes F distributed along its longitudinal length.

Each hole F is more or less in axis with one or more holes 14 relative to the duct 13 of the basket 10 (see figure 3C), which duct 13 of each stacked basket surrounds the delivery duct 32 when the basket is inserted on this duct 32. The delivery duct 32 therefore forms a sort of "insertion pin".

In this way, as clearly shown in figures 3C and 4, the liquid in delivery along the duct 32, during its ascent, passes radially through the matrix since, through the holes F and the holes 14 of the duct 13 it enters radially into the space 12 to exit from the holes 11" and, falling down to the base of the container, is conveyed to the duct 33.

The delivery 32 is a closed duct which ends before the upper closure of the tank where it is placed.

The end of the duct 32 therefore has a sort of closing plug.

Preferably, this closure cap can have a further hole F' at the top so that a minimum quantity of solvent purges from this hole and falls downwards by gravity together with the other falling liquid that comes out laterally from the basket it passes through, as shown in figure 4. This further flow at the top and falling downwards helps to better remove active ingredients still stuck to the external walls of the baskets.

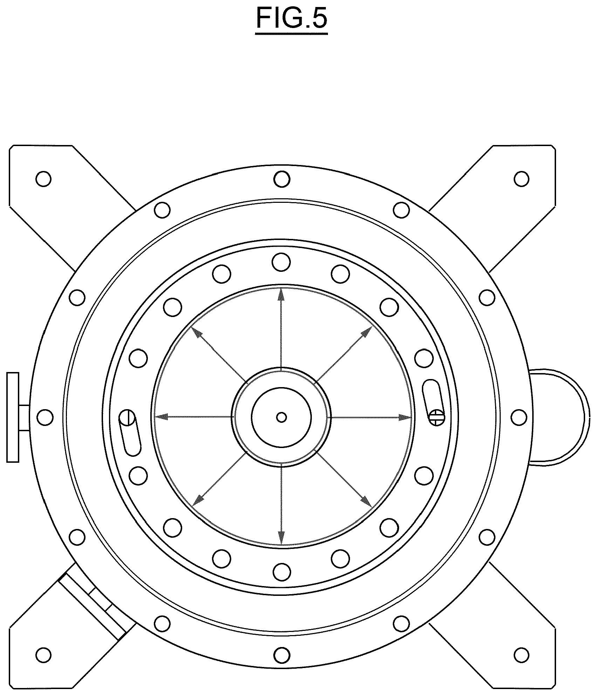

Figure 5 further shows a top view of a basket indicating the radial flow of the liquid which, as also shown in figure 3A, therefore passes through the matrices each arranged in its containment structure, or basket 10, if preferred.

Ultimately, therefore, the liquid, for example water, under subcritical conditions diffuses into the baskets 10 by means of the central manifold 32 (or delivery or duct, if preferred) equipped, by way of non-limiting example, with as many as forty radial holes F arranged along its wall longitudinally and a single axial hole F' at the top.

Regardless of the precise number of holes, these holes are sized in such a way as to determine a distribution of water through the baskets with a 97.5% radial gradient, guaranteeing a homogeneous crossing flow along the height of the tank. The residual 2.5% is used to direct the flow of the solvent once it has come out of the baskets towards the outlet located in the lower part.

Returning for a moment to figure 2, there is also an additional pump P201 which serves for the closed-loop circulation in the high-pressure ring.

There is also a special device for raising the temperature, for example a heat exchanger H201 similar to that of the low pressure ring, which allows the temperature to be raised to the desired subcritical value during circulation in the high pressure ring in order to bring and maintain the liquid in a subcritical condition.

The high pressure ring can also further comprise a recirculation tank S201.

It is a collection tank which is used if necessary to exclude the diffuser containers S301 and S401 and in any case to feed the P201 pump. Inside the said recirculation tank there are level controls necessary for the automatic operation of the aforementioned pump. When the minimum level is reached, the quantity of solvent pushed by the pump P101 from the ring at atmospheric pressure is reintegrated.

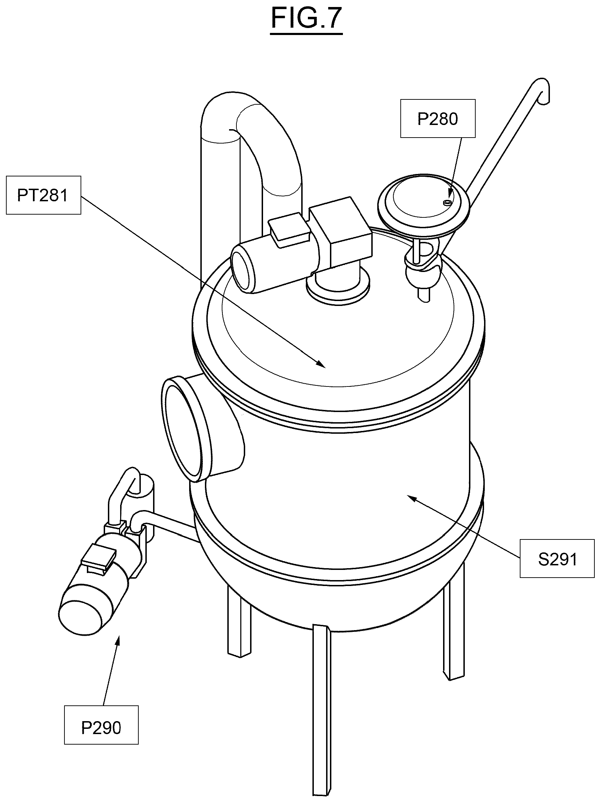

Figure 7 finally shows a subsequent under vacuum controlled expansion and concentration unit (or section, if preferred), placed in fluid communication with the high pressure ring described downstream of the high pressure ring.

It comprises a vacuum pump (P290), a modulating valve (P280) and a pressure transmitter (PT281).

These components are obviously connected to the tank (S291) where they convey the solvent in a subcritical condition coming from the high pressure ring and which is processed.

The vacuum pump (P290) serves to create a vacuum condition in the tank (S291) so that the solvent in a subcritical condition, as soon as it reaches it through the valve (P280), has a rapid expansion with a pressure drop and rapid reduction of pressure and temperature. The pressure transmitter (PT281) detects the pressure downstream of the valve VP280, adjusting its opening in feedback, thus dosing the flow rate of the solvent to keep the pressure of the tank S291 constant.

In this section there is thus a rapid expansion of the solvent in a subcritical condition with a corresponding reduction in pressure and temperature and therefore with sudden cooling.

The expansion unit itself is well known and also used for other applications.

In the present system it has been used as it allows a rapid temperature reduction.

### OPERATION OF THE PLANT

In use, the operation of the plant described is as follows:

Initially the solvent circulates in the low pressure section where it is pre-heated. Once the desired pre-heating temperature of the solvent is reached, the solvent is pumped from the first ring to the second ring at high pressure where it reaches a range of temperatures and pressures that bring it to a subcritical condition. The subcritical temperature is reached thanks to the second heating means.

In the case of water as the solvent, the temperature reached in the pre-heating section is preferably between 85°C and 97°C.

Again in the case of water as the solvent, the subcritical condition is represented by the reaching of a temperature between 130°C and 155°C.

Furthermore, in this high pressure section, the liquid further reaches a relative pressure between 3 and 6 bar, for example 150°C - 5.5 bar in the case of water, through the heat exchanger H201 and the vapour that develops at the aforesaid temperature.

In essence, therefore, in this high pressure ring the liquid is brought to the subcritical condition which, as mentioned, generally corresponds to values comprised between 130°C and 155°C with pressure between 3 and 6 bar in the case of water.

The aforementioned temperature ranges for reaching the subcritical condition can obviously vary according to the type of solvent used. For example, lower temperature values are obtained in the case of different solvents mixed with water with subcritical conditions already obtainable above 70°C.

Those skilled in the art will be able to evaluate the subcritical values as a function of the solvent mixture used.

This condition of operating in a subcritical condition is important for optimizing the extraction.

The solvent between the first and second rings is therefore completely identical in the chemical composition but instead changes in the physical composition in particular in terms of the pressure and temperature conditions due to its transformation into a subcritical solvent.

More specifically, the subcritical condition is reached practically instantaneously in the high pressure ring as heating above boiling point generates vapour and immediately increases the pressure.

Therefore, in this high pressure ring, the solvent immediately intercepts the heat exchanger (therefore the heating means or system provided). It is thus heated up above the boiling point, therefore generating steam and increasing the pressure (hence the definition of high pressure ring) and immediately going into subcritical conditions.

According to figure 4, once the subcritical condition has been reached, the solvent, passing through the heat exchanger, therefore enters the diffuser container S301 (which can also be defined simply as a tank) through the central duct 32 (that is to say, the delivery 32) and radially crosses the matrices in a diametrical direction thanks to the holes arranged along the length of the delivery duct 32 which are aligned with the holes 14 relative to the duct 13 of the basket 11. Therefore, as shown schematically in figure 3C and figure 3A, the liquid radially crosses the space 12 containing the matrices, passing from the internal cylindrical wall 11' of the basket 10 to the external wall 11' and is then ejected out through the holes 11" of this external wall, falling onto the bottom of the tank where it is conveyed towards the outlet 33.

With a continuous closed recirculation, the outlet conveys the liquid back into the inlet for a number of times depending on the protocol.

This optimizes the extraction from the matrices.

However, a single step would also be possible.

A small part of the solvent rising from the delivery 32 can exit like a fountain from the hole at the top, falling onto the sides of the matrices and being conveyed to the outlet 33.

More specifically, the pump P201 recirculates the solvent for a time determined by the recipe until the end of the process based on the transfer kinetics between the matrix and the solvent.

There can therefore be only one diffuser container so with recirculation inside it which is maintained for a certain time through the active maintenance of the pump P201.

With reference to figure 2, on the other hand, there may be two or even more diffuser containers.

In this case, the second container enters the ring after the first, and not simultaneously.

More specifically, in the case of figure 2, the closed-loop circulation takes place between the pump (P201) and the exchanger H201 to reach the subcritical condition and then go to the tank S201 or alternatively S301 (which contain the organic and/or inorganic matrix), and finally for the tank S401 from which it then returns to the starting pump.

The process continues until the matrices are exhausted (the verification takes place via a sampling valve) and therefore, at that point the product is discharged towards the controlled expansion section.

This system with two or more tanks in series allows its use when the matrix of a tank runs out but not the extraction capacity of the solvent.

Once the extraction process is finished (either in single or multiple steps) the solvent is sent to the next evaporation section (see figure 7).

More specifically, at the end of the extraction step, the product extracted from the working process in the diffuser container is sent to the vacuum expansion tank (S291) in order to obtain a concentrate of the extracted active ingredients.

In this way, by injecting the solvent around 150°C (or in any case in its subcritical range between 130°C and 150°C) into an environment (the tank S291 in figure 7) where the evaporation temperature is suitably maintained lower thanks to a special pressure control system (such as, for example, a liquid ring vacuum pump and modulating valve to dose the flow rate of the injected solvent), self-evaporation is created, given the conditions created, with immediate lowering of the temperature.

Indicatively, this reduction in temperature is around 70°C in the case of water.

This allows the concentration of the extract to be increased without altering it, preventing any degradation, in particular of the more thermolabile active ingredients, deriving from slow cooling.

The modulating valve (P280), again indicated in figure 7, regulates the flow rate, and sends the product to the output at the end of the process, dosing it through the feedback of the pressure transmitter (PT281).

Once all the extract has been transferred to the expansion tank, the concentration can continue through the injection of vapour into the jacket of the expansion tank which transmits the necessary energy without raising the temperature which is kept constant by controlling the pressure inside the tank (always under vacuum).

At the evaporation/boiling temperature of 70°C there is lower pressure than the atmospheric pressure.

## Claims

1. A plant for an extraction process with a liquid passing through a matrix consisting of organic and/or inorganic type residues, the plant comprising:
- At least one high pressure section configured to bring the liquid into a subcritical condition, said high pressure section comprising:
- **a)** At least one tank (S301, S401) forming a containment volume (31) for the containment of one or more baskets (10) each adapted to contain an organic and/or inorganic matrix;
- **b)** One or more of said baskets (10);
- **c)** A delivery duct (32) entering the containment volume (31) of the tank to lead the liquid into said tank and an outlet duct (33) to lead the liquid out of said tank;
- And wherein at least the part of the delivery duct arranged in the containment volume (31) of said tank (S301, S401) and said one or more baskets have a distribution of holes in such a way that at least a part of the liquid entering the containment volume (31) spreads radially into the containment volume, hitting and passing through said baskets radially through the distribution of holes in said baskets;
- **Characterized in that:**
- The delivery duct extends into the containment volume and is provided with a plurality of through holes (F) along its length, each basket forming an annular space (12) for containing the matrix delimited by a first wall (13) and a second wall (11) that surrounds the first wall, said first and second walls being equipped with a plurality of through holes (11", 14) and with the first wall which is in the form of a longitudinally hollow tube so as to form an axial channel (C) of such size as to be able to slidingly house the delivery duct (32) along it, so that one or more baskets can be stacked inside the containment volume (31) with the delivery duct (32) which slides into and crosses said channel (C) of each basket (10).

2. The plant, according to claim 1, wherein the basket (10) has an external perforated wall (11) and an internal perforated wall (13) forming the axial channel (C).

3. The plant, according to claim 2, wherein the basket has a substantially cylindrical shape with said external and internal cylindrical part.

4. The use of a plant, in accordance with one or more of the previous claims, for operating an extraction process with a liquid passing through a matrix consisting of organic and/or inorganic type residues and wherein the flow of liquid going up the delivery duct (32) comes out radially from the holes (F) of the delivery duct by intercepting the holes in the first wall (13) of each basket to enter the space (12) of the basket and radially cross the space (12) exiting from the holes in the second wall.

5. A method for carrying out an extraction process with a liquid that passes through a matrix consisting of organic and/or inorganic type residues, the method comprising at least one extraction step which includes:
- **a)** Arrangement of one or more baskets (10) each having a space (12) in which to store an organic and/or inorganic matrix and wherein each basket has a distribution of holes that allows the passage of a liquid which, passing through the basket passes through said space (12) intercepting the matrix arranged in said space (12);
- **b)** Arrangement of an organic and/or inorganic matrix in said space (12) of said one or more baskets;
- **c)** Arrangement of said one or more baskets inside the containment volume (31) of at least one tank (S301, S401);
- **d)** Sending a liquid into said containment volume (31) of the tank in such a way as to intercept said one or more baskets;
- **e)** And wherein the liquid entering said containment volume spreads radially into said containment volume (31), hitting and passing through said baskets radially;
- And wherein the liquid in said extraction step is under a subcritical condition;
- Wherein in said extraction step:
- Said operation of inserting said one or more baskets providing for inserting the/each basket loaded with the organic and/or inorganic matrix slidingly along the delivery duct so that said delivery duct (32) is slidingly inserted along the channel (C) of the/each basket that can slide along it, the delivery duct thus acting as a guide-pin for inserting one or more baskets loaded with the matrix along it;
- Sending the liquid along the delivery duct in such a way that the liquid spreads radially through the matrix to fall back out of each basket to the bottom of the tank and be sent to an outlet duct (33).

6. The method, according to claim 5, wherein, in the case of several baskets inserted into the containment volume (31), these are stacked one on top of the other.

## Patentansprüche

1. Anlage für einen Extraktionsprozess, bei dem eine Flüssigkeit durch eine aus organischen und/oder anorganischen Rückständen bestehende Matrix durchtritt, wobei die Anlage umfasst:
- mindestens einen Hochdruckabschnitt, der so konfiguriert ist, dass er die Flüssigkeit in einen unterkritischen Zustand bringt, wobei der Hochdruckabschnitt umfasst:
- **a)** Mindestens einen Tank (S301, S401), der ein Aufnahmevolumen (31) zur Aufnahme eines oder mehrerer Körbe (10) bildet, die jeweils dazu ausgelegt sind, eine organische und/oder anorganische Matrix aufzunehmen;
- b) Einen oder mehrere der Körbe (10);
- c) Eine Abgabeleitung (32), die in das Aufnahmevolumen (31) des Tanks eintritt, um die Flüssigkeit in den Tank zu leiten, und eine Auslassleitung (33), um die Flüssigkeit aus dem Tank zu leiten;
- und wobei mindestens der Teil der Abgabeleitung, die in dem Aufnahmevolumen (31) des Tanks (S301, S401) und des einen oder der mehreren Körbe angeordnet ist, eine Verteilung von Löchern derart aufweist, dass sich mindestens ein Teil der Flüssigkeit, die in das Aufnahmevolumen (31) eintritt, radial in das Aufnahmevolumen ausbreitet und die Körbe radial durch die Verteilung von Löchern in den Körben trifft und durch sie hindurchtritt;
- **dadurch gekennzeichnet, dass:**
- Die Abgabeleitung sich in das Aufnahmevolumen erstreckt und ist entlang ihrer Länge mit einer Vielzahl von Durchgangslöchern (F) versehen, wobei jeder Korb einen ringförmigen Raum (12) zur Aufnahme der Matrix bildet, der durch eine erste Wand (13) und eine zweite Wand (11), die die erste Wand umgibt, begrenzt ist, wobei die erste und die zweite Wand mit einer Vielzahl von Durchgangslöchern (11'', 14) ausgestattet sind und wobei die erste Wand die Form eines in Längsrichtung hohlen Rohrs hat, um einen axialen Kanal (C) von einer solchen Größe zu bilden, dass die Abgabeleitung (32) entlang davon gleitend untergebracht werden kann, so dass ein oder mehrere Körbe innerhalb des Aufnahmevolumens (31) mit der Abgabeleitung (32) gestapelt werden können, der in den Kanal (C) jedes Korbs (10) gleitet und diesen durchquert.

2. Anlage nach Anspruch 1, wobei der Korb (10) eine äußere perforierte Wand (11) und eine innere perforierte Wand (13) aufweist, die den axialen Kanal (C) bilden.

3. Anlage nach Anspruch 2, wobei der Korb eine im Wesentlichen zylindrische Form mit dem äußeren und inneren zylindrischen Teil aufweist.

4. Verwendung einer Anlage nach einem oder mehreren der vorhergehenden Ansprüche zum Betreiben eines Extraktionsprozesses, bei dem eine Flüssigkeit durch eine aus organischen und/oder anorganischen Rückständen bestehende Matrix durchtritt, und wobei der Flüssigkeitsstrom, der in die Abgabeleitung (32) aufsteigt, radial aus den Löchern (F) der Abgabeleitung austritt, indem die Löcher in der ersten Wand (13) jedes Korbs aufgefangen werden, um in den Raum (12) des Korbs einzutreten und den Raum (12), der aus den Löchern in der zweiten Wand austritt, radial zu durchqueren.

5. Verfahren zum Durchführen eines Extraktionsprozesses, bei dem eine Flüssigkeit durch eine aus organischen und/oder anorganischen Rückständen bestehende Matrix durchtritt, wobei das Verfahren mindestens einen Extraktionsschritt umfasst, der einschließt:
- **a)** Anordnen eines oder mehrerer Körbe (10), die jeweils einen Raum (12) aufweisen, in dem eine organische und/oder anorganische Matrix gelagert werden kann, und wobei jeder Korb eine Verteilung von Löchern aufweist, die den Durchtritt einer Flüssigkeit ermöglicht, die beim Durchtreten durch den Korb durch den Raum (12) hindurchtritt und die in dem Raum (12) angeordnete Matrix auffängt;
- **b)** Anordnen einer organischen und/oder anorganischen Matrix in dem Raum (12) des einen oder der mehreren Körbe;
- **c)** Anordnen des einen oder der mehreren Körbe innerhalb des Aufnahmevolumens (31) mindestens eines Tanks (S301, S401);
- **d)** Senden einer Flüssigkeit in das Aufnahmevolumen des Tanks in einer Weise, dass der eine oder die mehreren Körbe aufgefangen werden;
- **e)** Und wobei sich die Flüssigkeit, die in das Aufnahmevolumen eintritt, radial in das Aufnahmevolumen (31) ausbreitet, die Körbe radial trifft und durch sie hindurchtritt;
- Und wobei die Flüssigkeit in dem Extraktionsschritt unter einem unterkritischen Zustand ist;
- Wobei in dem Extraktionsschritt:
- Der Vorgang des Einführens des einen oder der mehreren Körbe sieht das gleitende Einführen des/jedes mit der organischen und/oder anorganischen Matrix beladenen Korbes entlang der Abgabeleitung vor, sodass die Abgabeleitung gleitend entlang des Kanals (C) des/jedes Korbes, der entlang ihm gleiten kann, eingeführt wird, wobei die Abgabeleitung somit als Führungsstift für das Einführen eines oder mehrerer mit der Matrix beladener Körbe entlang dieser wirkt;
- Senden der Flüssigkeit entlang der Abgabeleitung in einer Weise, dass sich die Flüssigkeit radial durch die Matrix ausbreitet, um aus jedem Korb zum Boden des Tanks zurückzufallen und zu einer Auslassleitung (33) gesendet zu werden.

6. Verfahren nach Anspruch 5, wobei bei mehreren in das Aufnahmevolumen (31) eingeführten Körben diese übereinander gestapelt werden.

## Revendications

1. Installation pour un processus d'extraction avec un liquide traversant une matrice constituée de résidus de type organique et/ou inorganique, l'installation comprenant :
- au moins une section à haute pression configurée pour amener le liquide dans un état sous-critique, ladite section à haute pression comprenant :
- **a)** au moins un réservoir (S301, S401) formant un volume de contenance (31) pour la contenance d'un ou plusieurs paniers (10) chacun adapté pour contenir une matrice organique et/ou inorganique ;
- **b)** un ou plusieurs desdits paniers (10) ;
- **c)** un conduit de distribution (32) entrant dans le volume de contenance (31) du réservoir pour amener le liquide dans ledit réservoir et un conduit de sortie (33) pour amener le liquide hors dudit réservoir ;
- et où au moins la partie du conduit de distribution disposé dans le volume de contenance (31) dudit réservoir (S301, S401) et lesdits un ou plusieurs paniers comportant une distribution de trous de telle sorte qu'au moins une partie du liquide entrant dans le volume de contenance (31) se répand radialement dans le volume de contenance, heurtant et traversant lesdits paniers radialement à travers la distribution de trous dans lesdits paniers ;
- **caractérisée en ce que** :
- le conduit de distribution s'étend dans le volume de contenance et est pourvu d'une pluralité de trous traversants (F) sur sa longueur, chaque panier formant un espace annulaire (12) pour contenir la matrice délimitée par une première paroi (13) et une seconde paroi (11) qui entoure la première paroi, lesdites première et seconde parois étant équipées d'une pluralité de trous traversants (11'', 14) et la première paroi ayant la forme d'un tube creux dans le sens longitudinal de manière à former un canal axial (C) d'une dimension telle qu'il permet de loger de façon coulissante le conduit de distribution (32) le long de celui-ci, de sorte qu'un ou plusieurs paniers peuvent être empilés à l'intérieur du volume de contenance (31) avec le conduit de distribution (32) qui coulisse dans ledit canal (C) de chaque panier (10) et qui le traverse.

2. Installation selon la revendication 1, le panier (10) comportant une paroi perforée externe (11) et une paroi perforée interne (13) formant le canal axial (C).

3. Installation selon la revendication 2, le panier ayant une forme sensiblement cylindrique avec lesdites parties cylindriques externe et interne.

4. Utilisation d'une installation, selon l'une ou plusieurs des revendications précédentes, pour exécuter un processus d'extraction avec un liquide traversant une matrice constituée de résidus de type organique et/ou inorganique et où le flux de liquide remontant le conduit de distribution (32) sort radialement des trous (F) du conduit de distribution en interceptant les trous de la première paroi (13) de chaque panier pour entrer dans l'espace (12) du panier et traverser radialement l'espace (12) en sortant par les trous de la seconde paroi.

5. Procédé permettant de réaliser un processus d'extraction avec un liquide traversant une matrice constituée de résidus de type organique et/ou inorganique, le procédé comprenant au moins une étape d'extraction qui inclut :
- **a)** la disposition d'un ou plusieurs paniers (10) ayant chacun un espace (12) dans lequel stocker une matrice organique et/ou inorganique et où chaque panier possède une distribution de trous qui permet le passage d'un liquide qui, en passant à travers le panier, traverse ledit espace (12) en interceptant la matrice disposée dans ledit espace (12) ;
- **b)** la disposition d'une matrice organique et/ou inorganique dans ledit espace (12) desdits un ou plusieurs paniers ;
- **c)** la disposition desdits ou plusieurs paniers à l'intérieur du volume de contenance (31) d'au moins un réservoir (S301, S401) ;
- **d)** l'envoi d'un liquide dans ledit volume de contenance du réservoir de manière à intercepter lesdits un ou plusieurs paniers ;
- **e)** et où le liquide entrant dans ledit volume de contenance se répand radialement dans ledit volume de contenance (31), heurtant et traversant radialement lesdits paniers ;
- et où le liquide dans ladite étape d'extraction est dans un état sous-critique ;
- où dans ladite étape d'extraction :
- ladite opération d'introduction desdits un ou plusieurs paniers consiste à introduire le ou les paniers chargés de la matrice organique et/ou inorganique en les faisant coulisser le long du conduit de distribution de manière à ce que ledit conduit de distribution soit introduit de façon coulissante le long du canal (C) du ou des paniers qui peuvent y coulisser, le conduit de distribution agissant ainsi comme une broche de guidage pour l'introduction de l'un ou plusieurs paniers chargés de la matrice le long de celui-ci ;
- à envoyer le liquide le long du conduit de distribution de manière à ce que le liquide se répande radialement à travers la matrice pour retomber de chaque panier au fond du réservoir et être envoyé vers un conduit de sortie (33).

6. Procédé selon la revendication 5, où, dans le cas de plusieurs paniers introduits dans le volume de contenance (31), ceux-ci sont empilés les uns sur les autres.
